Europäisches Patentamt

European Patent Office

Office européen des brevets

(11) Veröffentlichungsnummer: **0 271 659
B1**

(12) **EUROPÄISCHE PATENTSCHRIFT**

(45) Veröffentlichungstag der Patentschrift: **09.01.91**

(51) Int. Cl.⁵: **G 01 F 1/68,** G 01 F 1/78

(21) Anmeldenummer: **87114739.3**

(22) Anmeldetag: **09.10.87**

(54) **Vorrichtung zur Bestimmung des Massendurchflusses eines strömenden Mediums.**

(30) Priorität: **08.11.86 DE 3638137**

(43) Veröffentlichungstag der Anmeldung:
**22.06.88 Patentblatt 88/25**

(45) Bekanntmachung des Hinweises auf die
Patenterteilung:
**09.01.91 Patentblatt 91/02**

(84) Benannte Vertragsstaaten:
**DE FR GB IT**

(56) Entgegenhaltungen:
**DE-A-3 248 603
FR-A-2 509 470
FR-A-2 522 811**

**PATENT ABSTRACTS OF JAPAN, Band 6, Nr.
175 (P-141)1053r, 9. September 1982 & JP-A-57-
93 212**

**PATENT ABSTRACTS OF JAPAN, Band 6, Nr.
175 (P-141)1053r, 9. September 1982 & JP-A-57-
93 211**

(73) Patentinhaber: **ROBERT BOSCH GMBH
Postfach 50
D-7000 Stuttgart 1 (DE)**

(72) Erfinder: **Kuhn, Ulrich. Dr., Dipl.-Phys.
Birkenweg 5
D-7253 Renningen 2 (DE)**
Erfinder: **Stumpf, Sybille
Goethestrasse 3
D-7145 Markgröningen (DE)**

Courier Press, Leamington Spa, England.

## Beschreibung

Stand der Technik

Die Erfindung geht aus von einer Vorrichtung zur Bestimmung der Masse eines strömenden Mediums nach der Gattung des Hauptanspruchs. Aus der US—PS 43 99 697 ist bereits eine Vorrichtung mit zwei als Schichten auf einem Träger ausgebildeten Widerständen bekannt, von denen die erste Schicht als Heizwiderstand dient und unmittelbar auf dem Träger befestigt ist, während die zweite Schicht als temperaturabhängiger Meßwiderstand ausgebildet ist und unter Zwischenlage einer elektrisch isolierenden Schicht auf der ersten Schicht aufliegt. Die Heizwiderstand und Meßwiderstand trennende Isolationsschicht ist so dünn, daß ein guter Wärmeübergang vom Heizwiderstand auf den Meßwiderstand möglich ist. Änderungen des Massenstromes führen zu einem veränderten Wärmeübergang an der Oberfläche von Meßwidertand und Träger und, da der Meßwiderstand temperaturabhängig ist, zu einer Änderung des elektrischen Widerstandes des Meßwiderstandes. Hierdurch kommt es zur Verstimmung einer Meßschaltung, welche durch Veränderung des Heizstromes am Heizwiderstand kompensiert wird. Als Maß für die Masse des strömenden Mediums dient die dem Heizwiderstand zugeführte elektrische Leistung. Ein zusätzlicher temperaturabhängiger Widerstand, welcher auf einem weiteren Träger angeordnet ist, dient der Kompensation der Temperatur des Mediums.

Bekannt ist ebenfalls eine Meßvorrichtung der im Oberbegriff des Anspruchs 1 angegebenen Art (JP—A—57 93 212), bei der ein Träger mit einer Heizschicht versehen ist, die sich weiter in Richtung auf die Befestigung des Trägers erstreckt, als eine durch eine elektrisch isolierende Schicht von der Heizschicht getrennte Meßwiderstandsschicht.

Nachteilig an diesen bekannten Vorrichtungen ist, daß nicht nur der an das zu messende Medium konvektiv abgegebene Wärmestrom erfaßt wird, sondern auch der Wärmestrom, welcher durch Wärmeleitung vom Träger an die Halterung des Trägers übergeht. Da der Träger über eine im Vergleich zu den Widerständen große Wärmekapazität verfügt, führt ein solcher unerwünschter Wärmeübergang zu einem verzögerten Einschaltvorgang bis zum Erreichen der erforderlichen Betriebstemperatur der Meßanordnung sowie zu einem langsamen Ansprechen auf Änderungen der Masse des strömenden Mediums. Die Anpassung bzw. Wiederherstellung des Temperaturprofils entsprechend des stationären Temperaturprofils erfolgt erst nach dem Ablauf einer gewissen Zeit. Verantwortlich dafür ist das große Temperaturgefälle an der Übergangsstelle zwischen beheizter und unbeheizter Zone des Trägers. An derartigen Stellen mit großen Temperaturgradienten sind seitliche Wärmeabflüsse besonders stark ausgeprägt, da Wärme bekanntlich in Richtung des abnehmenden Temperaturgradienten strömt. Während der Zeit des Temperaturausgleichs ist die dem Heizwiderstand zugeführte elektrische Energie nur fehlerbehaftet als Maß für die Masse des strömenden Mediums wertbar. Bei Verwendung der bekannten Vorrichtung zur Erfassung der Ansaugluftmasse bei einer Brennkraftmaschine kann es dadurch zu zeitweisen Ungenauigkeiten bie der Anpassung des Kraftstoff-Luft-Gemisches kommen.

Die bekannten Vorrichtungen weis außerdem den Nachteil einer hohen Verschmutzungsneigung auf, da, insbesondere bei Verwendung der Vorrichtung im Ansaugrohr einer Brennkraftmaschine, Schmutzpartikel aus der Saugrohratmosphäre sich an der vorderen Kante des Meßwiderstandes anlagern und bei längerem Betrieb zu einer negativen Beeinflussung des Meßergebnisses führen.

Es ist außerdem bereits eine Vorrichtung zur Bestimmung der Masse eines strömenden Mediums bekannt (DE—PS 31 27 081), bei welcher die Heizleistung nicht über der gesamten Fläche eines heizbaren Meßwiderstandes konstant ist, sondern in Richtung der Mediumströmung abnimmt. Dies wird erreicht, indem die Breite der quer zur Richtung der Strömung verlaufenden Widerstandsbahnen in Strömungsrichtung zunimmt. Hierdurch gelingt es, die Temperatur des Meßwiderstandes über der von der Strömung überstrichenen Länge konstant zu halten.

Der Erfindung liegt die Aufgabe zugrunde, eine Vorrichtung zur Bestimmung der Masse eines strömenden Mediums zu entwickeln, die eine kurze Einschaltzeit, eine kurze Ansprechzeit auf Durchflußänderungen sowie auch bei längerem Gebrauch eine hohe Meßgenauigkeit aufweist.

Vorteile der Erfindung

Die erfindungsgemäße Vorrichtung mit den kennzeichnenden Merkmalen des Hauptanspruchs weist den Vorteil einer kurzen Einschaltzeit sowie einer kurzen Ansprechzeit auf Änderungen der Masse des strömenden Mediums auf, da die Verteilung der Heizleistung des Heizwiderstandes sowie die Lage des Heizwiderstandes relativ zum Meßwiderstand so bemessen sind, daß ein Wärmeabfluß zum Träger und von dort zur Befestigung des Trägers keinen Einfluß auf das Meßergebnis hat. Dieser Vorteil wird erreicht, indem sich der Heizwiderstand weiter als der Meßwiderstand in Richtung auf die Befestigung des Trägers hin erstreckt und indem der lokale Widerstandswert des Heizwiderstandes in Richtung auf die Befestigung hin abnimmt. Das stationäre Temperaturprofil des Meßwiderstandes ist schnell wieder erreicht, da das vom Heizwiderstand im Träger und damit im Meßwiderstand erzeugte Temperaturprofil keine größeren Absätze und Unstetigkeiten aufweist. Durch den eher "sachten" Verlauf des Temperaturgefälles im Träger bleiben die Wärmeabflüsse innerhalb der Ebene des Trägers gering. Die erfindungsgemäße Vorrichtung bietet außerdem den vorteil, mit geringeren Heizströmen auszukommen als bekannte Vorrichtungen.

Durch die in den Unteransprüchen aufgeführten Maßnahmen sind vorteilhafte Weiterbildungen und Verbesserungen der im Hauptanspruch angegebenen Vorrichtung zur Bestimmung der Masse eines strömenden Mediums möglich. Vorteilhaft ist es insbesondere, zur Verhinderung eines störenden Wärmeflusses von und zu den Widerständen mindestens einen thermisch isolierenden Schlitz in den Träger einzuarbeiten.

Weiterhin ist es von Vorteil, Heizwiderstand und Meßwiderstand in einem nicht zu geringen Abstand von der Anströmkante des Trägers anzuordnen, um auf diese Weise die Verschmutzungsneigung im Bereich von Heiz- und Meßwiderstand gering zu halten.

Weitere Widerstände der Vorrichtung sind vorteilhafterweise auf dem gleichen Träger untergebracht. Da die Auswirkungen einer Verschmutzung bei diesen Widerständen nicht so gravierend sind wie beim Meßwiderstand, können diese stromaufwärts des Meßwiderstandes plaziert werden.

Zeichnung

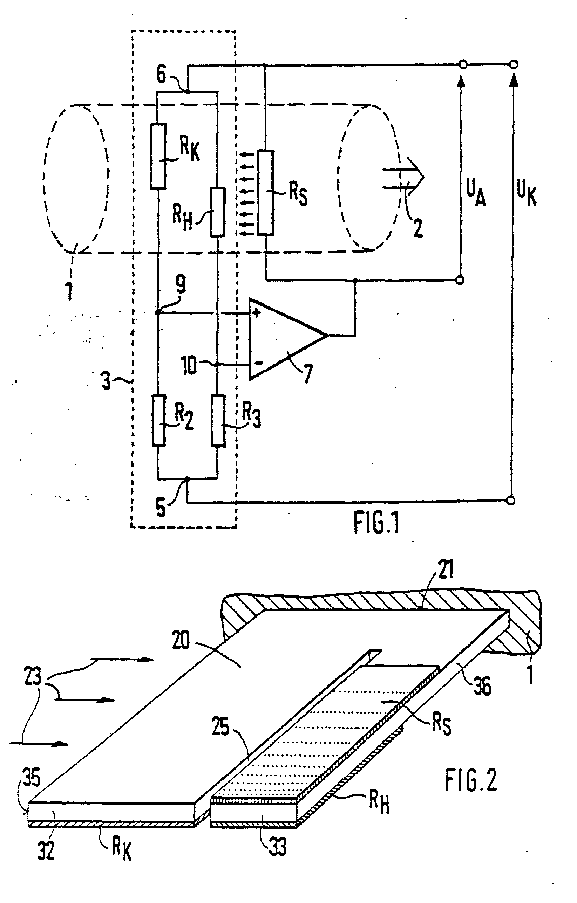

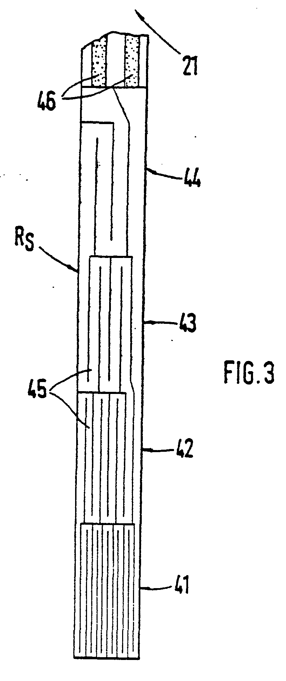

Ausführungsbeispiele der Erfindung sind in der Zeichnung vereinfacht dargestellt und in der nachfolgenden Beschreibung näher erläutert. Figur 1 zeigt ein Schaltbild zu der Erfindung, Figur 2 eine erfindungsgemäße Vorrichtung zur Bestimmung der Masse eines strömenden Mediums, Figur 3 als Ausschnitt aus Figur 2 eine weitere Ausführungsform der Erfindung.

Beschreibung der Ausführungsbeispiele

In Figur 1 ist mit der Bezugsziffer 1 ein von einem Medium durchströmtes Rohr bezeichnet, wobei die Strömungsrichtung des Mediums mit einem Pfeil 2 gekennzeichnet wird. Das Rohr 1 kann beispielsweise das Ansaugrohr einer Brennkraftmaschine sein. In das strömende Medium ist ein Widerstand $R_H$ eingebracht, der zur Erfassung der Durchflußmenge durch das Rohr 1 dient und der im folgenden als Meßwiderstand bezeichnet wird. Dieser Meßwiderstand $R_H$ ist als Schichtwiderstand oder Filmwiderstand auf einem in Figur 1 nicht dargestellten Substrat ausgebildet und ist Bestandteil einer beispielsweise als Brückenschaltung ausgebildeten Widerstandserfassungsanordnung 3. Diese Widerstandserfassungsanordnung 3 wird ergänzt durch die Widerstände $R_K$, $R_2$ und $R_3$ und ist als Widerstandsmeßbrücke angelegt. Ausgehend von einem Fußpunkt 5 sind in jeweils einem Brückenzweig die Widerstände $R_2$ und $R_K$ bzw. $R_3$ und $R_H$ in Reihe geschaltet. Die Anschlußleitungen der Widerstände $R_K$ und $R_H$ sind in einem Punkt 6 zusammengeführt. Einem Regelverstärker 7 werden die Signale eines Punktes 9 als Verbindungspunkt der Widerstände $R_K$ und $R_2$ sowie eines Punktes 10 als Verbindungspunkt der Widerstände $R_H$ und $R_3$ zugeführt.

Der Regelverstärker 7 ist zum Beispiel als Differenzverstärker ausgebildet, wobei die Erfindung jedoch nicht auf derartige Differenzverstärker beschränkt ist, sondern im allgemeinen auf jede analoge und digitale Regelfunktion anwendbar ist.

Die Ausgangsgröße des Regelverstärkers 7 wird einem Widerstand $R_S$ zugeführt, dessen andere Anschlußleitung mit dem Punkt 6 in Verbindung steht, so daß insgesamt eine geschlossene Schleife entsteht.

Es soll betont werden, daß die Widerstandserfassungsanordnung 3 nicht nur durch eine Brückenschaltung, sondern auch durch andere Widerstandsmeßschaltungen realisierbar ist. Zur Realisierung der Efindung ist daher nicht unbedingt eine Brückenschaltung erforderlich, auch brückenähnliche Meßschaltungen sind denkbar.

Die prinzipielle Wirkungsweise dieser Anordnung ist wie folgt:

Durch den Ausgangsstrom des Regelverstärkers 7 erfolgt eine Aufheizung des im folgenden als Heizwiderstand bezeichneten Widerstandes $R_S$, wobei die Heizleistung an diesem Widerstand im wesentlichen durch die Brückendiagonalspannung am Regelverstärker 7 bestimmt ist. Der Heizwiderstand $R_S$ ist so ausgeführt, daß er in möglichst unmittelbarem Wärmekontakt mit dem Meßwiderstand $R_H$ steht. Durch den guten Wärmekontakt zwischen $R_S$ und $R_H$ wird der Meßwiderstand $R_H$ auf eine weit oberhalb der Mediumtemperatur liegende Übertemperatur gebracht. Ändert sich nun die das Rohr 1 durchfließende Strömungsmenge, so ändert sich aufgrund der veränderten konvektiven Wärmeübertragung die Temperatur des Meßwiderstandes $R_H$ und es wird, da der Meßwiderstand $R_H$ einen von Null verschiedenen Temperaturkoeffizienten aufweist, die Widerstandserfassungsanordnung 3 verstimmt, der Regelverstärker 7 verändert daraufhin den Ausgangsstrom, welcher zum Heizwiderstand $R_S$ führt. Über die geschlossene Schleife werden also Änderungen des Meßwiderstandes $R_H$ infolge einer ab- oder zufließenden Wärmemenge stets durch Änderung der Heizleistung des Heizwiderstandes $R_S$ kompensiert, so daß der Meßwiderstand $R_H$ auf einem bestimmten Widerstandswert gehalten wird. Der Heizstrom, die Heizleistung bzw. die Ausgangsspannung $U_A$ des Regelverstärkers 7 sind ein Maß für die Durchflußmasse des strömenden Mediums.

Da der Heizstrom, die Heizleistung bzw. die Ausgangsspannung $U_A$ des Regelverstärkers 7 jedoch zusätzlich auch von der Temperatur des Strömungsmediums abhängen, müssen Temperaturschwankungen des Strömungsmediums kompensiert werden. Hierzu dient der im folgenden als Kompensationswiderstand bezeichnete Widerstand $R_K$, welcher, ebenso wie der Heizwiderstand $R_S$ und der Meßwiderstand $R_H$, schichtförmig ausgebildet und ebenfalls dem strömenden Medium ausgesetzt ist. Der Abgleich des Kompensationswiderstandes $R_K$—etwa durch mäandrierte Schnitte—erfolgt in der Weise, daß die Temperaturkoeffizienten des Kompensationswiderstandes $R_K$ und des Meßwiderstandes $R_H$ je nach Auswerteverfahren zur Erfassung der Signalgröße in einer vorgegebenen Beziehung zueinander stehen.

Die Widerstandserfassungsanordnung 3 wird vervollständigt durch einen ersten Referenzwider-

stand $R_2$, welcher sich zwischen Fußpunkt 5 und Punkt 9 befindet, sowie einen zweiten Referenzwiderstand $R_3$, welcher sich zwischen Fußpunkt 5 und Punkt 10 befindet. Es ist nicht notwendig, die Referenzwiderstände $R_2$ und $R_3$ dem strömenden Medium auszusetzen, jedoch sollten $R_2$ und $R_3$ in möglichst engem Wärmekontakt zueinander stehen, wodurch sich eine enge Tolerierung des Temperaturkoeffizienten der Widerstände $R_2$ und $R_3$ erübrigt.

Die Figur 2 zeigt eine Ausführungsform der Erfindung mit Heizwiderstand $R_S$, Meßwiderstand $R_H$ und Kompensationswiderstand $R_K$. Alle diese Widerstände sind als dünne Schichten auf einem als Träger dienenden, plattenförmigen Substrat 20 angeordnet, welches etwa rechteckförmig ist und welches an einer seiner schmalen Seiten im Bereich einer Befestigung 21 am vom zu messenden Medium durchströmten Rohr 1 befestigt ist. Quer zu der mit Pfeilen 23 bezeichneten Mediumströmungsrichtung ist im Substrat 20 ein Schlitz 25 eingebracht, welcher an der der Befestigung 21 abgewandten Seite des Substrates 20 beginnt und welcher bis nahe an die Befestigung 21 reicht. Durch den Schlitz 25 wird das Substrat 20 in eine erste Lippe 32 und eine zweite Lippe 33 unterteilt. Dabei ist die erste Lippe 32 einerseits durch eine der Strömung entgegengerichtete Anströmkante 35 des Substrates 20 begrenzt und andererseits durch den Schlitz 25; die zweite Lippe 33 des Substrates 20 ist einerseits durch den Schlitz 25 und andererseits durch eine Abströmkante 36 des Substrates 20 begrenzt.

Die Widerstände $R_S$, $R_H$ und $R_K$ bedecken jeweils den der Befestigung 21 abgewandten Teil der Lippen 32, 33 und sind vorteilhafterweise so angeordnet, daß der Kompensationswiderstand $R_K$ auf der ersten Lippe 32 und der Meßwiderstand $R_H$ auf der zweiten Lippe 33 angeordnet ist. Der Heizwiderstand $R_S$ befindet sich bei dem Ausführungsbeispiel entsprechend der Figur 2 auf der dem Meßwiderstand $R_H$ abgewandten Seite der zweiten Lippe 33 des Substrates 20 und reicht, ebenso wie der Meßwiderstand $R_H$, bis an den der Befestigung 21 abgewandten Rand der zweiten Lippe 33. Der Meßwiderstand $R_H$ ist somit auf der einen und der Heizwiderstand $R_S$ auf der anderen Seite der zweiten Lippe 33 des Substrates 20 angeordnet, $R_H$ und $R_S$ stehen unter Zwischenlage des gut wärmeleitenden Substrates 20 in thermischem Kontakt zueinander.

Die Länge des Schlitzes 25 ist so bemessen, daß dieser weiter in Richtung zur Befestigung 21 reicht als jeder der Widerstände $R_S$, $R_H$ und $R_K$, wodurch eine sehr gute thermische Trennung der Lippen 32, 33 und damit auch der einzelnen Widerstände erreicht wird.

Die Fertigung der Vorrichtung kann wesentlich vereinfacht werden, wenn jene Widerstandsschichten, welche den Kompensationswiderstand $R_K$ und den Meßwiderstand $R_H$ bilden, aus dem gleichen Material bestehen und im gleichen Fertigungsschritt hergestellt werden. Die Widerstandsschichten können zur Herstellung des erforderlichen individuellen Widerstands mit Mäanderstrukturen versehen werden. Dies kann etwa durch in der Zeichnung nicht dargestellte Laserschnitte erfolgen.

Um Wärmeströmungen aus dem Bereich des Meßwiderstandes $R_H$ in Richtung auf die Befestigung 21 zu verhindern, erstreckt sich der Heizwiderstand $R_S$ weiter in Richtung auf die Befestigung 21 als der Meßwiderstand $R_H$. Durch diese geometrische Anordnung des Meßwiderstandes $R_H$ wird erreicht, daß die durch die Ausdehnung des Heizwiderstandes $R_S$ festgelegt aufgeheizte Zone des Substrates 20 weiter in Richtung zur Befestigung 21 hin ragt als der Meßwiderstand $R_H$—ein störender Wärmeabfluß aus dem Bereich des Meßwiderstandes $R_H$ in Richtung zur Befestigung 21 wird auf diese Weise verhindert, die Ansprechgeschwindigkeit des Meßwiderstandes $R_H$ auf Durchflußänderungen damit vergrößert, da sich bei Durchflußänderungen nicht jeweils ein neues Temperaturprofil am Meßwiderstand $R_H$ einstellen muß.

Erfindungsgemäß ist der örtliche elektrische Widerstand des Heizwiderstandes $R_{-S}$ so ausgelegt, daß der Widerstand je Flächeneinheit (d.h. der spezifische Widerstand) an dem der Befestigung 21 abgewandten Ende des Substrates 20 am größten ist und in Richtung auf die Befestigung 21 hin abnimmt. Eine derartige Abstimmung des örtlichen Widerstandes kann z.B. durch Mäandrieren der Widerstandsschicht des Heizwiderstandes $R_S$ erfolgen, also durch das Abtragen von Widerstandsmaterial, z.B. mittels Laser, jedoch können auch verschiedene andere Maßnahmen mit Erfolg angewendet werden. So ist es beispielsweise möglich, durch geeignete Schichtung mehrerer, verschieden weit in Richtung auf die Befestigung 21 reichender oder eine unterschiedliche Lage auf dem Substrat 20 einnehmender Widerstandsschichten das gewünschte widerstandsprofil zu erhalten oder Widerstandsschichten mit unterschiedlichen spezifischen Widerständen nebeneinander liegend auf dem Substrat 20 anzuordnen.

Figur 3 zeigt als Ausschnitt aus Figur 2 eine zweckdienliche Mäandrierung des Heizwiderstandes $R_S$. Der Heizwiderstand $R_S$ ist dabei in mehrere durch Widerstandsbahnen 45 gebildete Heizbereiche 41, 42, 43, 44 unterteilt, wobei die Breite der Widerstandsbahnen 45 der jeweiligen Heizbereiche 41, 42, 43, 44 und damit auch deren Querschnittsfläche in Richtung auf die Befestigung 21 hin zunimmt, der Widerstand je Flächeneinheit somit abnimmt. Das durch den Heizwiderstand $R_S$ innerhalb des Substrates 20 und des Meßwiderstandes $R_H$ erzeugte Temperaturprofil verläuft also in Richtung auf die Befestigung 21 hin abnehmend. Das Layout des Heizwiderstandes $R_S$ kann so gestaltet sein, daß die Widerstandsbahnen 45 in Strömungsrichtung verlaufen oder, wie in Figur 3 dargestellt, quer zur Strömungsrichtung oder in beliebiger anderer Weise.

Sowohl Berechnungen als auch Versuche haben ergeben, daß durch die vorgeschlagene Profilierung des Heizwiderstandes $R_S$ die einschaltzeit verkürzt sowie die Ansprechgeschwindigkeit der Vorrichtung auf Änderungen der Masse des strömenden Mediums beschleunigt werden kann, wobei als zusätzlicher Vorteil noch eine verringerte Stromaufnahme des Heizwiderstandes $R_S$ zu nennen ist.

Die Stromzufuhr zum Heizwiderstand $R_S$ kann durch auf dem Substrat 20 befestigte Strombahnen 46 erfolgen. Dies gilt in gleicher Weise für die Stromzufuhr zu den Widerständen $R_H$ und $R_K$.

Selbstverständlich ist der der Erfindung zugrundeliegende Gedanke nicht auf das beschriebene Ausführungsbeispiel beschränkt. Neben den bereits erwähnten unterschiedlichen Möglichkeiten, innerhalb des Heizwiderstandes $R_S$ ein Widerstandsprofil zu erreichen, kann auch die Anbringung des Meßwiderstandes $R_H$ relativ zum Heizwiderstand $R_S$ in einer anderen Form erfolgen. So ist es beispielsweise möglich, den Meßwiderstand $R_H$ uner Zwischenlage einer elektrisch isolierenden Schicht durch den Heizwiderstand $R_S$ zu unterlegen. Der besondere Vorteil dieser Variante liegt darin, daß die elektrisch isolierende Schicht in geringerer Dicke hergestellt werden kann als das Substrat 20, dessen Materialdicke für die Stabilität der Vorrichtung verantwortlich ist und damit gewissen Beschränkungen unterliegt.

## Patentansprüche

1. Vorrichtung zur Bestimmung der Masse eines strömenden Mediums mit einem in der zu messenden Strömung mittels einer Befestigung (21) gehaltenen Substrat (20), auf welchem sich ein schichtförmiger, temperaturabhängiger Meßwiderstand ($R_H$) befindet sowie ein über eine Widerstandserfassungsanordnung (3) in Abhängigkeit von der Masse des strömenden Mediums regelbarer Heizwiderstand ($R_S$), der ebenfalls schichtförmig ist und der unter Zwischenlage einer elektrisch isolierenden Schicht vom Meßwiderstand ($R_H$) getrennt ist, wobei sich der Heizwiderstand ($R_S$) weiter als der Meßwiderstand ($R_H$) in Richtung auf die Befestigung (21) hin erstreckt, dadurch gekennzeichnet, daß der Widerstandswert je Flächeneinheit des Heizwiderstandes ($R_S$) in Richtung auf die Befestigung (21) hin abnimmt.

2. Vorrichtung nach Anspruch 1, dadurch gekennzeichnet, daß der Heizwiderstand ($R_S$) in einzelne Widerstandsbahnen (45) von in Richtung auf die Befestigung (21) hin zunehmender Querschnittsfläche unterteilt ist.

3. Vorrichtung nach Anspruch 2, dadurch gekennzeichnet, daß die Widerstandsbahnen (45) in Strömungsrichtung des Mediums verlaufen.

4. Vorrichtung nach Anspruch 2, dadurch gekennzeichnet, daß die Widerstandsbahnen (45) quer zur Strömungsrichtung des Mediums verlaufen (Figur 3).

5. Vorrichtung nach Anspruch 1, dadurch gekennzeichnet, daß der Heizwiderstand ($R_S$) sich aus mindestens zwei Widerstandsschichten zusammensetzt.

6. Vorrichtung nach Anspruch 5, dadurch gekennzeichnet, daß die mindestens zwei Widerstandsschichten in einer Ebene nebeneinander liegend angeordnet sind.

7. Vorrichtung nach Anspruch 5, dadurch gekennzeichnet, daß die mindestens zwei Widerstandsschichten in übereinander geschichteten Ebenen angeordnet sind.

8. Vorrichtung nach einem der vorhergehenden Ansprüche, dadurch gekennzeichnet, daß sich Heizwiderstand ($R_S$) und Meßwiderstand ($R_H$) stromabwärts eines quer zur Strömungsrichtung in Richtung auf die Befestigung (21) hin im Substrat (20) eingebrachten Schlitzes (25) befinden.

9. Vorrichtung nach Anspruch 8, dadurch gekennzeichnet, daß sich der Schlitz (25) weiter als der Heizwiderstand ($R_S$) in Richtung auf die Befestigung (21) hin erstreckt.

10. Vorrichtung nach Anspruch 9, dadurch gekennzeichnet, daß sich stromaufwärts des Schlitzes (25) ein weiterer Widerstand ($R_K$) auf dem Substrat (20) befindet.

## Revendications

1. Dispositif pour déterminer la masse d'un fluide en écoulement à l'aide d'un substrat (20) maintenu dans l'écoulement à mesurer à l'aide d'un moyen de fixation (21), substrat qui porte une résistance de mesure ($R_H$, dépendant de la température, résistance en forme de couche, ainsi qu'une résistance chauffante ($R_S$) réglable par un dispositif de mesure de résistance (3), en fonction de la masse du fluide en écoulement, résistance chauffante qui est également en forme de couche et est séparée de la résistance de mesure ($R_H$), par interposition d'une couche d'isolation électrique, la résistance chauffante ($R_S$) s'étendant plus loin que la résistance de mesure ($R_H$) en direction du moyen de fixation (21), caractérisé en ce que: la valeur de la résistance par unité de surface pour la résistance chauffante ($R_S$) diminue en direction du moyen de fixation (21).

2. Dispositif selon la revendication 1, caractérisé en ce que la résistance chauffante ($R_S$) est subdivisée en différents chemins résistants (45) dont la surface de la section va en augmentant en direction du moyen de fixation (21).

3. Dispositif selon la revendication 2, caractérisé en ce que les chemins résistants (45) sont dirigés dans la direction d'écoulement du fluide.

4. Dispositif selon la revendication 2, caractérisé en ce que les chemins résistants (45) sont dirigés transversalement à la direction d'écoulement du fluide (figure 3).

5. Dispositif selon la revendication 1, caractérisé en ce que la résistance chauffante ($R_S$) se compose d'au moins de deux couches résistantes.

6. Dispositif selon la revendication 5, caractérisé en ce qu'au moins les deux couches résistantes sont juxtaposées dans un plan.

7. Dispositif selon la revendication 5, caractérisé en ce qu'au moins les deux couches résistantes sont superposées dans des plans stratifiés.

8. Dispositif selon l'une des revendications précédentes, caractérisé en ce que la résistance chauffante ($R_S$) et la résistance de mesure ($R_H$) se trouvent en aval d'une fente (25) réalisée transversalement à la direction de l'écoulement, dans le substrat (20) en direction du moyen de fixation (21).

9. Dispositif selon la revendication 8, caractérisé en ce que la fente (25) s'étend plus loin que la résistance chauffante ($R_S$) en direction du moyen de fixation (21).

10. Dispositif selon la revendication 9, caractérisé en ce qu'en amont de la fente (25), le substrat (20) porte une autre résistance ($R_K$).

**Claims**

1. Device for determining the mass of a flowing medium having a substrate (20) which is held in the flow to be measured by means of a fixing (21) and on which there is situated a temperature-dependent measuring resistor ($R_H$) in the form of a film, and a heating resistor ($R_S$) which is controllable via a resistance-recording arrangement (3) as a function of the mass of the flowing medium, is likewise in the form of a film and is separated from the measuring resistor ($R_H$) with the interposition of an electrically insulating film, the heating resistor ($R_S$) extending further towards the fixing (21) than the measuring resistor ($R_H$), characterized in that the resistance value per unit area of the heating resistor ($R_S$) decreases towards the fixing (21).

2. Device according to Claim 1, characterized in that the heating resistor ($R_S$) is divided into individual resistance paths (45) of increasing cross-sectional area towards the fixing (21).

3. Device according to Claim 2, characterized in that the resistance paths (45) extend in the direction of flow of the medium.

4. Device according to Claim 2, characterized in that the resistance paths (45) extend transversely to the direction of flow of the medium (Figure 3).

5. Device according to Claim 1, characterized in that the heating resistor ($R_S$) is composed of at least two resistive films.

6. Device according to Claim 5, characterized in that the resistive films, of which there are at least two, are arranged next to one another in one plane.

7. Device according to Claim 5, characterized in that the resistive films, of which there are at least two, are arranged in planes layered one above the other.

8. Device according to one of the preceding claims, characterized in that heating resistor ($R_S$) and measuring resistor ($R_H$) are situated downstream of a slit (25) made in the substrate (20) transversely to the direction of flow, towards the fixing (21).

9. Device according to Claim 8, characterized in that the slit (25) extends further towards the fixing (21) than the heuting resistor ($R_S$).

10. Device according to Claim 9, characterized in that there is a further resistor ($R_K$) on the substrate (20) upstream of the slit (25).

FIG.1

FIG.2

FIG.3